# EUROPEAN PATENT SPECIFICATION

(11) **EP 1 865 037 B1**
(45) Date of publication and mention of the grant of the patent: **23.09.2009**
(21) Application number: 06011624.1
(22) Date of filing: 06.06.2006
(51) Int. Cl.: C09D 123/04

(54) **Low temperature PE topcoat**
Niedrigtemperaturdeckschicht
Couche de finition a basse température

(43) Date of publication of application: 12.12.2007
(73) Proprietor: Borealis Technology Oy, 06101 Porvoo (FI)
(72) Inventor: Anker, Martin, 42543 Hisings Kärra (SE); Leiden, Leif, 07130 Anttila (FI); Äärilä, Jari, 06100 Porvoo (FI)
(74) Representative: Grünecker, Kinkeldey, Stockmair & Schwanhäusser Anwaltssozietät

(56) References cited:
- EP-A- 0 679 704
- WO-A-20/04067654
- WO-A-20/06053741
- US-B1- 6 645 588
- PATENT ABSTRACTS OF JAPAN vol. 1997, no. 03, 31 March 1997 (1997-03-31) & JP 08 300561 A (NIPPON STEEL CORP), 19 November 1996 (1996-11-19)

## Description

The present invention concerns the use of a specific polyethylene material for the preparation of coating compositions, in particular on metal substrates, such as pipes, wherein the coating composition provides excellent mechanical properties at very low temperatures, in particular temperatures as low as -45°C.

### Description of the prior art

Metal substrates, such as steel pipes, are widely used for transporting various products, such as natural gas, crude oil. Steel pipes used for these purposes are usually coated, prior to use, with polyolefin resins for the purpose of corrosion prevention and protection from external environment. Typically, high-pressure low-density polyethylenes, linear low-density polyethylenes, medium density polyethylenes and ethylene vinyl acetate copolymers are employed for this purpose. In recent years, the mining areas of natural gas and crude oil have been extended to regions where extremely low temperatures, such as -45C° or lower, regularly occur during extended winter periods, such as Alaska, Siberia and other northern polar regions. Accordingly, the requirements for polyolefin coatings for steel pipes had to be adapted to the low temperature environment, compared with the standard coating materials used in high temperature regions such as the Middle East.

In the prior art, various approaches have been taken with respect to the provision of suitable polyolefin coatings for steel pipes to be used in low temperature environments. One example of such an approach is disclosed in JP-11-058607 A2. This Japanese patent application discloses a steel pipe coated with a polyolefin which shows good low temperature impact resistance at -60°C. In order to achieve these properties, this Japanese patent application proposes the use of a polyethylene resin having a density of from 0.915 to 0.935 g/cm³. A similar approach also has been taken in the European patent application EP 0679704 A1. This application also deals with improving the impact resistance at low temperatures, such as -45°C or lower. In order to achieve this aim, this European patent application suggests the use of a blend of high-pressure low-density polyethylene having a density of between 0.915 to 0.930 g/cm³ with an ethylene-α-olefin copolymer having a density of 0.895 to 0.920 g/cm³.

The common approach disclosed in both applications discussed above is the use of a polyethylene material having a rather low-density, optionally in combination with further polymeric components, such as the ethylene-α-olefin copolymer disclosed in EP 0679704 A1.

JP-11-106682 A2 and JP-09-143400 A2 both disclose resin compositions suitable for powder coating, comprising a blend of ethylene polymers, including acid modified ethylene polymers, polyethylenes of various densities and elastomeric components. EP 1555292 A1 discloses a polymer composition suitable for extrusion coating, for example for preparing multilayered materials, wherein the composition comprises a multimodal high-density polyethylene and a low-density polyethylene. WO 97/03139 finally discloses a coating composition for coatings for a high service temperature range, for example for coating rigid substrates, such as pipes. The coating composition comprises an ethylene polymer having a density between 0.915 and 0.955 g/cm³. This application emphasizes in particular the suitability of such a composition for high service temperatures, i.e. high temperature environments such as the Middle East.

EP 679 704, US 6 645 588, WO 2006/053741 and WO 2004/067 654 all disclose adhesive compositions which may comprise propylene based resins.

### Object of the present invention

As outlined above, the extension to low temperature regions requires the provision of improved coating compositions adapted to withstand the particular and severe conditions, in particular during winter times. Accordingly, it is an object of the present invention to provide improved coating compositions for rigid substrates, in particular steel pipes, able to provide sufficient protection of the coated substrate against environmental influences. Thereby, the coated steel pipe is safely protected from corroding substances, such as water, so that the service lifetime of the coated pipe can be extended and the safety requirements fulfilled.

### Brief description of the present invention

The present invention solves the above-outlined object with the use as defined in claim 1. Preferred embodiments are outlined in claims 2 to 9 and in the following specification. The coating compositions prepared in accordance with the teaching of the present invention enable a satisfactory protection of steel pipes at very low temperatures, in particular coating compositions prepared in accordance with the technical teaching of the present invention provide coatings with a sufficient elongation at break at -45°C.

### Detailed description of the invention

The present invention enables the provision of coating materials for rigid substrates, such as steel pipes satisfying the above-outlined criteria, by using an ethylene polymer having a density of from 0.937 to 0.945 g/cm³, wherein the ethylene polymer is an ethylene polymer containing from 80 to 100% by weight of ethylene repeating units and from 0 to 20% by weight of α-olefin repeating units, characterized in that the repeating units derived from α-olefins amount to from 3.5 to 4.5 by weight.

The use of the material as identified above and as further explained below enables the provision of coating compositions displaying an elongation at break at -45°C of at least 150%, determined in accordance with the standard test method GOST 11262 (plastics tensile test method/CMEA standard 1199-78/official edition English version approved by Inter-standard/USSR State Committee for Standard/revised edition November 1986 with Amendment No. R1 approved in September 1985/Standard Publishing House 1986). The elongation at break is measured with dog bone samples with a pulling speed of 50 mm/min at -45°C. The elongation at break at -45°C more preferably is at least 200%, more preferably 250%, even more preferably at least 275% and most preferably more than 300%.

The ethylene polymer to be employed in accordance with the present invention shows a density of from 0.937 to 0.945 g/cm³, more preferably the density lies within a range of from 0.938 to 0.943 g/cm³ and most preferably the ethylene polymer shows a density of from 0.939 to 0.941 g/cm³ (determined according to ISO 1183 D).

The ethylene polymer to be employed in accordance with the present invention preferably displays a melt flow rate (MFR₂) of from 0.2 to 1.0 g/10 min, more preferably 0.35 to 0.90g/10 min and even more preferably 0.4 to 0.8 g/10 min (determined according to ISO 1133, condition D).

The ethylene polymer furthermore comprises from 80 to 100% by weight of ethylene repeating units and from 0 to 20% by weight of α-olefin repeating units. The α-olefin repeating units are preferably selected from C₃-C₁₀ α-olefins, more preferably C₄-C₆ α-olefins, and most preferably C₄ α-olefin, i.e. 1-butene. The comonomer content amounts to from 3.5 to 4.5 wt%. As outlined above, the most preferred α-olefin comonomer is 1-butene, so that a particular preferred ethylene polymer to be employed in accordance with the present invention is an ethylene polymer comprising as only comonomer repeating units derived from 1-butene in an amount as indicated above in the general discussion of the comonomer content. The most preferred ethylene polymer is, thus, an ethylene polymer comprising about 4% by weight of repeating units derived from 1-butene.

The ethylene polymer may be furthermore selected from unimodal or multimodal ethylene polymers, and in accordance with the present invention it is in particular preferred when the ethylene polymer is a multimodal polymer, in particular a bimodal polymer. Such multimodal ethylene polymers can be described as blends of different ethylene polymers having differing average molecular weights, molecular weight distributions and/or comonomer contents. Such multimodal ethylene polymers may be prepared by blending processes, including melt blending of mixtures of ethylene polymers with suitable devices, such as extruders, or multimodal ethylene polymers may be prepared in the form of so-called reactor blends, i.e. the multimodal ethylene polymer is the product of a multi-step polymerization process wherein ethylene polymers are polymerized in distinct steps, always in the presence of ethylene polymers polymerized in the preceding step(s).

In accordance with the present invention, it is in particular preferred to employ such reactor blends, i.e. the preferred ethylene polymer to be employed in accordance with the present invention, is a multimodal, preferably bimodal ethylene polymer prepared by a sequential polymerization process as briefly identified above. Reference in this respect can be made to WO 97/03139.

As outlined above, the ethylene polymer to be used in accordance with the present invention is preferably at least bimodal with respect to the molecular weight distribution.

In accordance with the present invention, this embodiment can be realized by including two different ethylene polymers, differing at least with respect to the MFR.

Such an embodiment is one preferred embodiment of the present invention. Such an embodiment may be exemplified by a mixture of a lower molecular weight component with a higher molecular weight component. The lower molecular weight (LMW) component has a higher MFR than the higher molecular weight (HMW) component. The amount of the LMW component is typically between 30 to 70 wt%, preferably 40 to 60 wt% of the total amount of ethylene polymer. The amount of the HMW component is typically between 30 to 70 wt%, preferably 40 to 60 wt% of the total amount of ethylene polymer.

The reactor made polymer composition defines a different embodiment, compared with blends (mechanical blends), wherein a polymer is first produced and is then blended mechanically with a second polymer. The preparation of a reactor made polymer composition ensures the preparation of a homogenous mixture of the components, for example homogenously distributed first polymer and second polymer in the composition. As outlined above, the reactor made polymer composition is a preferred embodiment of the present invention, although also mechanical blends are envisaged by the present invention. Such mechanical blends are prepared by blending (compounding) the two fractions with each other, normally also adding some additives.

Similar considerations also apply with respect to the provision of bimodal or multimodal ethylene polymers, in particular the polymers comprising two different ethylene polymers components with differing MFR values. While such multimodal, preferably bimodal components may also be prepared by mechanical blending processes, it is preferred in accordance with the present invention to provide such multimodal or bimodal compositions in the form of a reactor made compositions, meaning that the second (or any further) component is prepared in the presence of the first component (or any preceding components).

A suitable process for preparing reactor made polymers is outlined below.

In accordance with a preferred embodiment of the present invention, the ethylene polymer comprises two different ethylene polymer components, preferably differing in particular with respect to MFR. Such a mixture of two ethylene polymer components preferably may be produced in accordance with the present invention in a multistage process using one or more polymerization reactors, which may be the same or different, for example, at least slurry-slurry, gas phase-gas phase or any combination of slurry and gas phase polymerization. Each stage may be effected in parallel or sequentially using same or different polymerization methods. Advantageously, the above-mentioned mixture of the two different ethylene polymer components is prepared in a sequence comprising at least one slurry polymerization and at least one gas phase polymerization. Suitably, the slurry polymerization is the first polymerization step, followed by a gas phase polymerization. This order, however, may also be reversed. In the case of such a sequential polymerization reaction, each component may be produced in any order by carrying out the polymerization in each step, except the first step, in the presence of the polymer component formed in the preceding step. Preferably, the catalyst used in the preceding step is also present in the subsequent polymerization step. Alternatively, it is also possible to add additional quantities of the identical catalyst or of a different catalyst in a subsequent polymerization step.

A suitable possibility of forming a multimodal ethylene polymer component is a polymerization sequence comprising a first polymerization step in a slurry reactor, preferably a loop reactor, followed by a polymerization step in a gas phase reactor, wherein the second ethylene polymer component is prepared in the presence of the already prepared first ethylene polymer component (prepared in the slurry reactor).

A preferred multistage process is the above-identified slurry-gas phase process, such as developed by Borealis and known as the Borstar® technology. In this respect, reference is made to the European applications EP 0 887 379 A1 and EP 517 868 A1.

In the case of multimodal compositions, at least with respect to the molecular weight distribution or MFR, the composition comprises a low molecular weight component (LMW) and a higher molecular weight component (HMW). The LMW component and the HMW component are made in different steps in any order. Preferably, typically when a Ziegler-Natta catalyst is used, the LMW fraction is produced in the first step and the HMW fraction is produced in the subsequent step, in the presence of the HMW fraction.

One example of a suitable sequential polymerization method for preparing multimodal, including bimodal compositions as exemplified above, is a process employing first a slurry reactor, for example a loop reactor, followed by a second polymerization in a gas phase reactor. Such a reaction sequence provides a reactor blend of different ethylene polymer components for which the MFR values can be adjusted as, in principle, known to the skilled person during the sequential polymerization steps. It is of course possible and also envisaged by the present invention to carry out the first reaction in a gas phase reactor while the second polymerization is carried out in a slurry reactor, for example a loop reactor. The process as discussed above, comprising at least two polymerization steps, is advantageous in view of the fact that it provides easily controllable reaction steps enabling the preparation of a desired reactor blend of ethylene polymer components. The polymerization steps may be adjusted, for example, by appropriately selecting monomer feed, hydrogen feed, temperature, pressure, type and amount of catalyst, in order to suitably adjust the properties of the polymerization products obtained, including in particular MFR, MW, MWD and comonomer content.

Such a process can be carried out using any suitable catalyst for the preparation of ethylene polymers, including single site catalyst, Ziegler-Natta catalyst as well as any other suitable catalyst, including metallocenes, non-metallocenes, chromium-based catalyst Preferably, the process as discussed above is carried out using a Ziegler-Natta catalyst.

Examples of suitable catalysts for preparing ethylene polymers to be employed in the present invention are disclosed in EP 0 688 794 A1. An alternative to such multistage, multi-reactor processes is the preparation of a multimodal polymer component in one reactor as known to the skilled person. In order to produce a multimodal polymer composition, the skilled person in particular can control the reaction by changing polymerization conditions, using different types of catalyst and using different hydrogen feeds.

With respect to the above-mentioned preferred slurry-gas phase process, the following general information can be provided with respect to the process conditions.

Temperature of from 70°C to 110°C, preferably between 90°C and 100°C, in, with a pressure in the range of from 50 to 90 bar, preferably 60 to 90 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 60°C to 115°C, more preferably 60°C to 100°C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 0.5 to 5 hours.

In accordance with the present invention, the ethylene polymer to be employed for preparing a coating composition suitable in particular at very low temperatures, may be compounded with further usual additives employed for such coating compositions, such as stabilizers ( e.g. antioxidants, UV- and process stabilizers) as well as fillers and reinforcing agents, as known to the skilled person. Such additional components for the coating composition to be prepared in accordance with the technical teaching of the present invention may be employed in suitable amounts as known to the skilled person, depending in particular from the intended end use application.

The additives mentioned above can be compounded with the ethylene polymer in a usual manner, in particular by mechanical blending processes.

As outlined above, the coating composition which can be prepared in accordance with the teaching of the present invention is suitable for coating rigid substrates, made from inorganic or organic materials, such as metals, metal alloys, ceramics, polymeric materials. The substrates may, in principle, be shaped in any desired form, including sheets, molded articles, such as profiles, as well as hollow substrates, including tubes, pipes and hoses. Preferably, the rigid substrate is made from a metal, such as iron, steel, noble metals, metal alloys, composition metals and the substrate is in particular preferably in the shape of a pipe, in particular an iron or steel pipe. In particular, the rigid substrate to be coated is a pipe to be used for transporting natural gas and/or or crude oil and/or products derived therefrom. Due to the improved low temperature properties, the coating composition prepared in accordance with the teaching of the present invention enables a good protection of such pipes from environmental influences, in particular corroding substances, including water, so that service time as well as safety of pipelines. can be improved when practicing the present invention.

Coating compositions prepared in accordance with the teaching of the present invention are in particular suitable as topcoat for coating of steel pipes, in order to provide protection of the coated steel pipes at low temperatures. The present invention accordingly can be practiced when coating a steel pipe in a usual manner, typically involving a first coating of a primer, like an epoxy primer covering the steel surface followed by the application of an adhesive layer, such as a layer comprising coupling agent, like a maleic acid modified polyethylene. Thereafter, a coating composition comprising the specific ethylene polymer as defined in the present invention may be coated as topcoat, in order to provide the desired protection. Typical coating conditions are known to the skilled person, as well as suitable coating thicknesses. A typical example is exemplified below.

Steel pipes coated in accordance with the technical teaching of the present invention provide a superior protection of the coated material at very low temperatures, in particular due to the sufficient elongation at break at -45°C as provided by the present invention. Contrary to the previous attempts as described in the prior art sections, employing ethylene polymers having densities of below 0.937 g/cm³, the present invention achieves the desired low temperature resistance by using an ethylene polymer having a density of 0.939 g/cm³ or more. This is a surprising finding in view of the clear teaching in the prior art to use ethylene polymers having lower densities for low temperature applications.

### Examples

Rotating steel pipes were powder coated with an epoxy primer (such as Scotchkote 226N of 3M) at a line speed of 10 m/min at a temperature of from 180 to 200°C. Subsequently, a maleic acid anhydride grafted polyethylene adhesive, prepared according to composition 2 in EP 1 316 598 A1, and the topcoat were co-extruded onto the epoxy layer. Co-extrusion was performed with two single screw extruders with die temperatures of from 220 to 250°C. The epoxy primer layer had a thickness of about 100 µm and the adhesive layer was coated with a thickness of about 250 µm. The topcoat layer was coated with a thickness of 3.2 mm. After coating, the coated steel pipes were subjected to a treatment with a silicon pressure roller and cooled in a water spray chamber in order to increase the adhesion between the coated layers. The elongation at break at -45°C (strain at break) was determined for samples of the cooled three-layer structure. The following results were determined.

| | **1** | **2** | **3 (Ref)** | **4 (Ref)** |
|---|---|---|---|---|
| Butene (% by weight) | 4.0 | 3.8 | 3.0 | 2.8 |
| Density (kg/m3) | 939.6 | 940.0 | 942.2 | 943,0 |
| MFR₂ (g/10 min) | 0.48 | 0.54 | 0.42 | 0.53 |
| Strain at break (-45°C) | 322 | 328 | 216 | 157 |

These examples clearly demonstrate that the present invention, by using an ethylene polymer as defined herein, enables the provision of topcoat layers providing a sufficient protection at very low temperatures due to the improvement achieved with respect to the elongation at break at -45°C.

The ethylene polymers as employed in Examples 1 and 2 as well as in Examples 3 and 4, respectively, were prepared using a sequence comprising prepolymerising, polymerizing in a loop reactor followed by polymerizing in a gas phase reactor. The obtained product was pelletised using an extruder and, as additive, an antioxidant and a process stabilizer were added. The product was furthermore mixed with a carbon black master batch so that a final carbon black content of 2.5 wt% resulted. Exemplary polymerization conditions are provided in the following:

### Illustrative polymerization conditions for the ethylene polymer employed in Examples 1 and 2

### Prepolymeriser

- Temp: 70 °C
- Pressure: 65 bar
- Catalyst: 7 g/h
- Al/Ti: 15
- C2 1.1 kg/h
- H2/C3: 0.1 g/kg
- C4/C2: 40 g/kg
- Propane: 21 kg/h
- Antistatic agent : 4 ppm

### Loop reator

- Temp: 95 °C
- Pressure: 64 bar
- C2: 5.5 mol%
- H2/C2: 470 mol/kmol
- Propane: 26 kg/h
- MFR2: 390 g/10 min
- Density: 972 kg/m³

### Gas phase reactor

- Temp: 82 °C
- Pressure: 20 bar
- Ethylene partial press: 3.2 bar
- Propane conc.: 28 mol%l
- H2/C2: 24 mol/kmol
- C4/C2: 420 mol/kmol
- MFR2: 0.5 g/10 min
- Density: 939 kg/m³
- Split: 1/45/54 % in Prepoly/Loop/GPR

### Illustrative polymerization conditions for ethylene polymer employed in Examples 3 and 4

### Prepolymeriser

- Temp: 70 °C
- Pressure: 65 bar
- Catalyst: 7 g/h
- Al/Ti: 15
- C2: 1.1 kg/h
- H2/C3: 0.4 g/kg
- C4/C2: 0 g/kg
- Propane: 21 kg/h
- Antistatic agent: 4 ppm

### Loop reator

- Temp: 95 °C
- Pressure: 64 bar
- C2: 5.5 mol%
- H2/C2: 470 mol/kmol
- Propane: 26 kg/h
- MFR2: 400 g/10 min
- Density: 972 kg/m³

### Gas phase reactor

- Temp: 82 °C
- Pressure: 20 bar
- Ethylene partial press: 3.5 bar
- Propane conc.: 28 mol%
- H2/C2: 29 mol/kmol
- C4/C2: 310 mol/kmol
- MFR2: 0.5 g/10 min
- Density: 941 kg/m³
- Split: 1/45/54 % in Prepoly/Loop/GPR

## Claims

1. Use of an ethylene polymer comprising ethylene repeating units and α-olefin repeating units, with a density of between 0.937 and 0.945 g/cm³ for preparing coating compositions for low temperature applications, **characterized in that** the repeating units derived from α-olefin amount to from 3.5 to 4.5% by weight of the ethylene polymer, wherein low temperature applications refer to temperatures of -45°C or lower, wherein density is measured according to ISO 1183 D.

2. Use in accordance with claim 1, wherein the α-olefin repeating units are derived from C₃-C₁₀ α-olefins.

3. Use in accordance with any one of claims 1 and 2, wherein the ethylene polymer has an MFR of from 0.2 to 1.0 g/10 min, determined according to ISO 1133, condition D.

4. Use in accordance with any of the preceding claims, wherein the ethylene polymer is a multimodal ethylene polymer.

5. Use in accordance with any of the preceding claims, wherein the ethylene polymer is a bimodal ethylene polymer.

6. Use in accordance with any of the preceding claims, wherein the ethylene polymer is a reactor blend.

7. Use in accordance with any of the preceding claims, wherein the ethylene polymer comprises units derived from 1-butene as the only comonomer.

8. Use in accordance with any of the preceding claims, wherein the ethylene polymer has a density of from 0.939 to 0.941 g/cm³.

9. Use in accordance with any of the preceding claims, wherein the ethylene polymer is further compounded with usual additives for coating applications.

## Patentansprüche

1. Verwendung eines Ethylenpolymers, umfassend Ethylenwiederholungseinheiten und α-Olefinwiederholungseinheiten, mit einer Dichte zwischen 0,937 und 0,945 g/cm³ zum Herstellen von Beschichtungszusammensetzungen für Tieftemperaturanwendungen, **dadurch gekennzeichnet, dass** sich die Wiederholungseinheiten, die von α-Olefin herrühren, im Bereich von 3,5 bis 4,5 Gew.-% bezogen auf das Ethylenpolymer bewegen, wobei Tieftemperaturanwendungen sich auf Temperaturen von -45° C oder tiefer beziehen, wobei die Dichte gemäß ISO 1183 D gemessen wird.

2. Verwendung gemäß Anspruch 1, wobei die α-Olefinwiederholungseinheiten von C₃-C₁₀ α-Olefinen herrühren.

3. Verwendung gemäß einem der Ansprüche 1 und 2, wobei das Ethylenpolymer einen MFR von 0,2 bis 1,0 g/10 min besitzt, bestimmt gemäß ISO 1133, Bedingung D.

4. Verwendung gemäß einem der vorhergehenden Ansprüche, wobei das Ethylenpolymer ein multimodales Ethylenpolymer ist.

5. Verwendung gemäß einem der vorhergehenden Ansprüche, wobei das Ethylenpolymer ein bimodales Ethylenpolymer ist.

6. Verwendung gemäß einem der vorhergehenden Ansprüche, wobei das Ethylenpolymer ein Reaktorblend ist.

7. Verwendung gemäß einem der vorhergehenden Ansprüche, wobei das Ethylenpolymer Einheiten umfasst, die von 1-Buten als das einzige Comonomer herrühren.

8. Verwendung gemäß einem der vorhergehenden Ansprüche, wobei das Ethylenpolymer eine Dichte von 0,939 bis 0,941 g/cm³ besitzt.

9. Verwendung gemäß einem der vorhergehenden Ansprüche, wobei das Ethylenpolymer zusätzlich mit üblichen Additiven für Beschichtungsanwendungen compoundiert ist.

## Revendications

1. Utilisation d'un polymère d'éthylène comprenant:
des motifs éthylène répétitifs et des motifs α-oléfine répétitifs, ayant une masse volumique comprise entre 0,937 et 0,945 g/cm³, pour la préparation de compositions de revêtement destinées à des applications à basse température, **caractérisée en ce que** les motifs répétitifs issus d'α-oléfine représentent de 3,5 à 4,5 % en poids du polymère d'éthylène, les applications à basse température se référant à des températures égales ou inférieures à -45°C, et la masse volumique étant mesurée conformément à la norme ISO 1183 D.

2. Utilisation selon la revendication 1, dans laquelle les motifs α-oléfine répétitifs sont issus d'α-oléfines en C₃ à C₁₀.

3. Utilisation selon l'une quelconque des revendications 1 et 2, dans laquelle le polymère d'éthylène a un MFR de 0,2 à 1,0 g/10 min, déterminé conformément à la norme ISO 1133, condition D.

4. Utilisation selon l'une quelconque des revendications précédentes, dans laquelle le polymère d'éthylène est un polymère d'éthylène multimodal.

5. Utilisation selon l'une quelconque des revendications précédentes, dans laquelle le polymère d'éthylène est un polymère d'éthylène bimodal.

6. Utilisation selon l'une quelconque des revendications précédentes, dans laquelle le polymère d'éthylène est un mélange de réacteur.

7. Utilisation selon l'une quelconque des revendications précédentes, dans laquelle le polymère d'éthylène comprend des motifs issus de 1-butène à titre de seul comonomère.

8. Utilisation selon l'une quelconque des revendications précédentes, dans Laquelle le polymère d'éthylène a une masse volumique de 0,939 à 0,941 g/cm³.

9. Utilisation selon l'une quelconque des revendications précédentes, dans laquelle le polymère d'éthylène est en outre combiné avec des additifs habituels pour des applications de revêtement.
